(19) **Europäisches Patentamt European Patent Office Office européen des brevets**

(11) **EP 3 207 280 B1**

(12) **FASCICULE DE BREVET EUROPEEN**

(45) Date de publication et mention de la délivrance du brevet:
**12.12.2018 Bulletin 2018/50**

(21) Numéro de dépôt: **15787144.3**

(22) Date de dépôt: **07.10.2015**

(51) Int Cl.:
***F16F 15/14*** *(2006.01)*

(86) Numéro de dépôt international:
**PCT/EP2015/073117**

(87) Numéro de publication internationale:
**WO 2016/058880 (21.04.2016 Gazette 2016/16)**

(54) **SYSTÈME D'AMORTISSEMENT PENDULAIRE EQUIPÉ D'UN ORGANE DE SUPPORT PRÉSENTANT DES PISTES DE ROULEMENT JUXTAPOSÉES EN CONTINU AUTOUR DE L'AXE DE ROTATION**

PENDELDÄMPFUNGSSYSTEM MIT TRÄGERELEMENT MIT ANGRENZENDEN, KONTINUIERLICH UM DIE DREHACHSE ANGEORDNETEN LAUFBAHNEN

PENDULUM DAMPING SYSTEM COMPRISING A SUPPORT MEMBER HAVING ADJOINING RACEWAYS ARRANGED CONTINUOUSLY AROUND THE AXIS OF ROTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2014 FR 1459983**

(43) Date de publication de la demande:
**23.08.2017 Bulletin 2017/34**

(73) Titulaire: **Valeo Embrayages**
**80009 Amiens Cedex 2 (FR)**

(72) Inventeurs:
• **VERHOOG, Roel**
**F-60190 Gournay sur Aronde (FR)**

• **GRIECO, Giovanni**
**F-92700 Colombes (FR)**

(74) Mandataire: **Cardon, Nicolas et al**
**Valeo Embrayages**
**Sce Propriété Intellectuelle**
**Le Delta**
**14, avenue des Béguines**
**95892 Cergy Pontoise Cedex (FR)**

(56) Documents cités:
**EP-A2- 2 703 688     FR-A1- 2 989 753**
**US-A- 1 315 380**

## Description

## Domaine technique

L'invention se rapporte au domaine des systèmes d'amortissement des vibrations, de type oscillateur pendulaire, destinés à équiper les transmissions de véhicule automobile.

## Etat de la technique

Un moteur à explosion présente des acyclismes du fait des explosions se succédant dans les cylindres du moteur, la fréquence des acyclismes variant notamment en fonction du nombre de cylindres et de la vitesse de rotation du moteur. Un système d'amortissement a pour fonction de filtrer les vibrations engendrées par les acyclismes en amont de la boite de vitesses. A défaut, des vibrations pénétrant dans la boîte de vitesses y provoqueraient en fonctionnement des chocs, bruits ou nuisances sonores particulièrement indésirables.

On connaît, dans l'état de la technique, des systèmes d'amortissement de type pendulaire, également appelés oscillateurs pendulaires ou pendules, équipant des transmissions de véhicule automobile.

Un tel système d'amortissement de type oscillateur pendulaire est, par exemple, décrit dans le document FR2989753, qui est considéré comme l'état de la technique le plus proche. Le système d'amortissement comporte un organe de support et une pluralité de masselottes pendulaires montées oscillantes par rapport à l'organe de support. Chaque masselotte pendulaire est montée oscillante par rapport à l'organe de support au moyen de deux corps roulants qui coopèrent chacun, d'une part, avec une piste de roulement interne portée par ladite masselotte pendulaire et, d'autre part, avec une piste de roulement externe, en vis-à-vis de ladite piste de roulement interne, portée par l'organe de support.

Les documents EP 2 703 688 A2 et US 1 315 380 A décrivent des systèmes d'amortissement pendulaire avec une piste de roulement externe où des masselottes liées au même corps y oscillent pouvant passer librement par toutes les positions définies par cette piste de roulement externe.

Dans un tel système d'amortissement, les pistes de roulement externes sont formées dans des orifices ménagés dans l'organe de support de telle sorte que le débattement angulaire des masselottes pendulaires par rapport à l'organe de support est nécessairement limité. Ainsi, dans certaines conditions de fonctionnement, et notamment lors du démarrage moteur, l'amplitude des vibrations est telle que l'oscillateur pendulaire est saturé et les masselottes pendulaires viennent en butée contre l'organe de support. De telles conditions de fonctionnement occasionnent à chaque fois des chocs entre les masselottes pendulaires et l'organe de support. Afin de limiter les nuisances sonores pour de telles conditions de fonctionnement, l'organe de support et/ou les masselottes pendulaires sont équipés d'éléments de butée en élastomère limitant le débattement des masselottes pendulaires par rapport à l'organe de support. Toutefois, de tels éléments de butée en élastomère sont soumis à des températures élevées et à un grand nombre de chocs. De tels éléments de butée en élastomère conduisent donc à une limitation de la durée de vie du système d'amortissement et à une augmentation du coût et de la complexité du système.

## Objet de l'invention

Une idée à la base de l'invention est d'apporter une solution simple, économique et efficace à ces problèmes.

Selon un mode de réalisation, l'invention fournit un système d'amortissement des vibrations pour une transmission de véhicule automobile comportant :

- un organe de support apte à être entraîné en rotation autour d'un axe X et comportant une pluralité de pistes de roulement externes ; et
- une pluralité de masselottes pendulaires circonférentiellement réparties autour de l'axe X et comportant chacune deux pistes de roulement internes, radialement à l'intérieur par rapport aux pistes de roulement externes ;
- chacune des masselottes pendulaires étant montée oscillante par rapport à l'organe de support au moyen de deux corps roulants qui coopèrent respectivement avec l'une et l'autre des deux pistes de roulement internes de ladite masselotte pendulaire et coopèrent chacun avec l'une des pistes de roulement externes de l'organe de support afin de guider le mouvement d'oscillation de ladite masselotte pendulaire par rapport audit organe de support ;
- ledit système d'amortissement étant remarquable en ce que les pistes de roulement externes sont juxtaposées les unes à la suite des autres continûment autour de l'axe X de telle sorte que chaque corps roulant soit apte à librement passer d'une première piste de roulement externe à une seconde piste de roulement externe, adjacente à ladite première piste de roulement externe, lorsque les masselottes pendulaires sont sollicitées par des vibrations d'une amplitude telle que chaque corps roulant desdites masselottes pendulaires est déplacé au-delà d'une extrémité de ladite première piste de roulement externe.

Ainsi, si le débattement des masselottes pendulaires dépasse le débattement engendré par le guidage des corps roulants sur les premières pistes de roulement externes associées, les corps roulants des masselottes pendulaires passent librement à des pistes de roulement externe adjacentes de telle sorte que le débattement des masselottes pendulaires par rapport à l'organe de support n'est pas limité et qu'il n'est plus nécessaire de prévoir des éléments de butée en matériau élastomère, complexes et couteux, permettant de limiter les nuisances sonores lorsque l'oscillateur pendulaire est soumis à des vibrations dont l'amplitude conduit à sa saturation.

Selon d'autres modes de réalisation avantageux, un tel système d'amortissement peut présenter une ou plusieurs des caractéristiques suivantes :

- les deux corps roulants associés à chaque masselotte pendulaire sont retenus à la masselotte pendulaire associée.
- les éléments roulants sont des rouleaux cylindriques qui comportent chacun au moins une extrémité équipée d'un pion faisant saillie axialement et chaque masselotte pendulaire comporte au moins un flasque bordant axialement les pistes de roulement internes de ladite masselotte pendulaire qui est équipé de deux rainures recevant chacune un desdits pions.
- les rouleaux cylindriques comportent deux extrémités équipées d'un pion faisant saillie axialement et chaque masselotte pendulaire comporte deux flasques disposés de part et d'autre des pistes de roulement internes de ladite masselotte pendulaire qui sont chacun équipés de deux rainures recevant chacune l'un desdits pions.
- un jeu fonctionnel est prévu entre chaque pion et les bords de la rainure dans laquelle ledit pion est reçu, ledit jeu fonctionnel étant agencé de telle sorte que le pion ne touche pas les bords de la rainure lorsque le rouleau cylindrique équipé dudit pion coopère avec la piste de roulement interne et la piste de roulement externe.
- les rainures présentent une forme arquée dont la concavité est dirigée radialement vers l'intérieur.
- l'organe de support comporte un anneau extérieur et un anneau intérieur concentrique et coaxial à l'axe X entre lesquelles s'étendent radialement les masselottes pendulaires et les pistes de roulement externes sont ménagées dans une surface intérieure de l'anneau extérieur.
- l'anneau intérieur est recouvert d'un anneau en matériau élastomère de sorte à amortir la chute des masselottes pendulaires lorsque les masselottes pendulaires ne sont plus soumises à la force centrifuge.
- l'organe de support comporte en outre deux disques s'étendant axialement de part et d'autres des anneaux intérieur et extérieur.
- le système d'amortissement comporte des organes de maintien axial qui sont fixés aux masselottes pendulaires et qui sont disposés de part et d'autre desdites masselottes pendulaires, chaque organe de maintien axial étant interposé entre l'une desdites masselottes pendulaires et l'un des disques de l'organe de support afin de centrer axialement les masselottes pendulaires par rapport à l'organe de support.

- au moins l'une des extrémités circonférentielles en vis-à-vis de deux masselottes pendulaires adjacentes est équipé d'un élément de butée en élastomère.
- les masselottes pendulaires comportent chacune deux extrémités circonférentielles équipées d'un élément de butée en élastomère.
- l'organe de support comporte autant ou plus de pistes de roulement externes que le système d'amortissement ne comporte de corps roulants.
- l'organe de support comporte trois ou quatre pistes de roulement externes par masselotte pendulaire.
- les pistes de roulement externes présentent une concavité dirigée vers l'extérieur et les pistes de roulement internes présentent une concavité dirigée vers l'intérieur.
- la somme angulaire des intervalles entre les masselottes pendulaires est inférieure à la distance angulaire d'une piste de roulement externe.

Selon un mode de réalisation, l'invention fournit également un véhicule automobile comportant un système d'amortissement précité.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

Sur ces figures :

- **La figure 1** est une vue éclatée, en perspective, d'un système d'amortissement des vibrations dans lequel une seule masselotte pendulaire est représentée.

- **La figure 2** est une vue de face d'un système d'amortissement selon la figure 1 représentant les masselottes pendulaires dans une position médiane, lorsqu'elles sont soumises à la force centrifuge.

- **La figure 3** est une vue du système d'amortissement de la figure 2 en coupe selon III-III.

- **La figure 4** est une vue du système d'amortissement de la figure 2 en coupe selon le plan IV-IV.

- **La figure 5** est une vue de face du système d'amortissement de la figure 2 dans une position centrifugée, l'un des flasques latéraux de l'une des masselottes pendulaires n'ayant pas été représenté afin de permettre l'observation des pistes de roulement internes portées par ladite masselotte pendulaire.

- **Les figures 6 et 7** sont des vues de face du système d'amortissement représentant les masselottes pendulaires lorsque le moteur est arrêté et qu'ainsi, les masselottes pendulaires ne sont plus soumises à la force centrifuge.

- **La figure 8** est une vue de face du système d'amortissement illustrant schématiquement trois positions successives d'une même masselotte pendulaire par rapport à l'organe de support.

## Description détaillée de modes de réalisation

Dans la description et les revendications, on utilisera, les termes "externe" et "interne" ainsi que les orientations "axiale" et "radiale" pour désigner, selon les définitions données dans la description, des éléments du système d'amortissement. Par convention, l'orientation "radiale" est dirigée orthogonalement à l'axe X de rotation du système d'amortissement déterminant l'orientation "axiale" et, de l'intérieur vers l'extérieur en s'éloignant dudit axe, l'orientation "circonférentielle" est dirigée orthogonalement à l'axe du système d'amortissement et orthogonalement à la direction radiale. Les termes "externe" et "interne" sont utilisés pour définir la position relative d'un élément par rapport à un autre, par référence à l'axe X de rotation du système d'amortissement, un élément proche de l'axe est ainsi qualifié d'interne par opposition à un élément externe situé radialement en périphérie.

Le système d'amortissement des vibrations est destiné à être disposé dans la chaîne de transmission d'un véhicule automobile, entre le moteur à explosion et la boîte de vitesses. Il peut notamment être intégré à un volant moteur, un double volant amortisseur, un mécanisme d'embrayage, un embrayage de pontage d'un dispositif d'accouplement hydraulique ou à une friction d'embrayage.

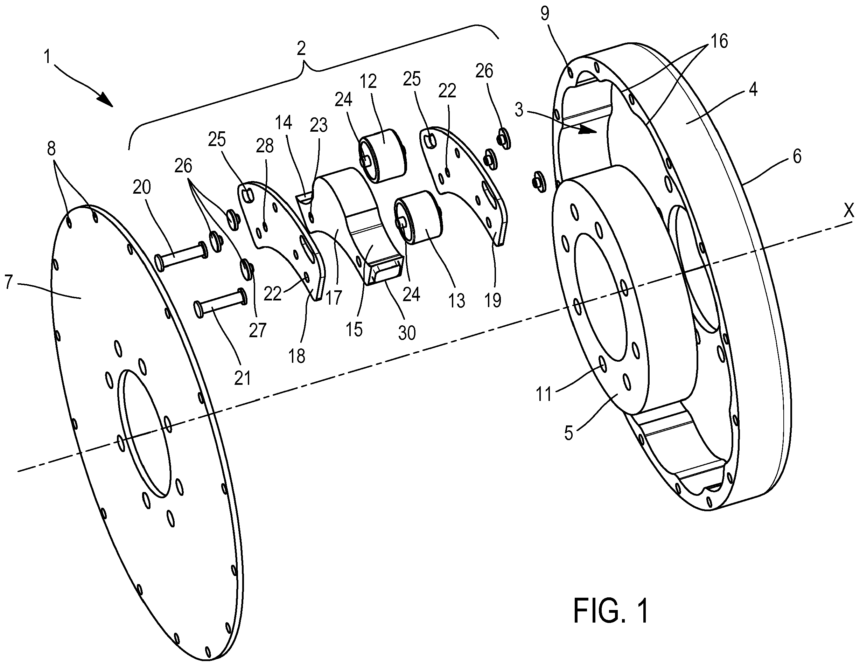

En relation avec la figure 1, l'on observe que le système d'amortissement comporte un organe de support 1 des masselottes pendulaires 2 apte à être entraîné en rotation selon un axe X. L'organe de support 1 est destiné à être solidarisé en rotation à un élément de la chaîne de transmission d'un véhicule automobile.

L'organe de support 1 définit un espace de logement 3, fermé, à l'intérieur duquel sont logées les masselottes pendulaires 2. Pour ce faire, l'organe de support 1 comporte un anneau extérieur 4, un anneau intérieur 5 et deux disques 6, 7. Les anneaux, extérieur 4 et intérieur 5, sont concentriques et coaxiaux à l'axe X. Les deux disques 6, 7 s'étendent de part et d'autre des anneaux, extérieur 4 et intérieur 5. L'espace de logement 3 des masselottes pendulaires 2 s'étend axialement entre les deux disques 6, 7 et radialement entre les anneaux extérieur 4 et intérieur 5.

Dans le mode de réalisation représenté, l'un des disques 6 et l'anneau extérieur 4 sont formés d'un même élément monobloc. Le disque 7 et l'anneau intérieur 5 sont solidarisés audit élément monobloc par un premier jeu d'organes de fixation extérieurs, tels que des rivets, non illustrés, passant au travers d'alésages 8, 9 ménagées dans le disque 7 et dans l'anneau extérieur 9 et par un second jeu d'organes de fixation, tels que des rivets, non illustrés, passant au travers d'alésages 10, 11 ménagés dans les disques 6, 7 et dans l'anneau intérieur 5. Nous notons que, selon un autre mode de réalisation non représenté, les deux disques 6, 7 sont des éléments distincts des anneaux, extérieur 4 et intérieur 5, qui sont fixés contre les faces axiales des anneaux, extérieur 4 et intérieur 5, afin de les prendre en sandwich.

Les masselottes pendulaires 2 sont montées oscillantes par rapport à l'organe de support 1 selon un plan orthogonal à l'axe X de rotation du système d'amortissement. Chacune des masselottes pendulaires 2 est guidée par rapport à l'organe de support 1 au moyen de deux corps roulants qui sont, dans le mode de réalisation représenté, des rouleaux cylindriques 12, 13, de section circulaire.

Chaque masselotte pendulaire 2 est équipée de deux pistes de roulement internes 14, 15 coopérant respectivement avec l'un et l'autre des deux rouleaux cylindriques 12, 13. D'autre part, l'organe de support 1 est également équipé de pistes de roulement externes 16 ménagées dans la surface intérieure de l'anneau extérieure 4. Ainsi, en fonctionnement, chaque rouleau cylindrique 12, 13 coopère avec l'une des pistes de roulement internes 14, 15 portées par la masselotte pendulaire 2 et avec une piste de roulement externe 16, en vis-à-vis de ladite piste de roulement interne 14, 15, portée par l'organe de support 1.

Les pistes de roulement externes 16 comportent une concavité dirigée radialement vers l'extérieur alors que les pistes de roulement internes 14, 15 comportent une concavité dirigée radialement vers l'intérieur. Les pistes de roulement 14, 15, 16 présentent une forme générale épicycloïdale. La géométrie des pistes de roulement est déterminée en fonction de l'ordre d'accordage souhaité. De manière générale, l'ordre d'accordage des masselottes pendulaires est tel que :

$$(1) \; n_{mp} \simeq \sqrt{R/L}$$

Avec :

$n_{mp}$ : l'ordre d'accordage des masselottes pendulaires ;

L : le rayon de l'arc de cercle parcouru par le centre de masse de la masselotte pendulaire par rapport au support ; et

R : la distance séparant l'axe de rotation X du centre de l'arc de cercle parcouru par le centre de masse de la masselotte pendulaire par rapport au support.

Les masselottes pendulaires sont avantageusement accordées à un ordre prenant une valeur proche du rang des harmoniques prépondérantes générées par le moteur à combustion. Un moteur fonctionnant avec un nombre de 2*n cylindres générant principalement des harmoniques de rang n, les masselottes pendulaires sont donc accordées à un ordre $n_{mp}$ égal à n ou proche de celui-ci.

Comme représenté sur les figures 1, 3 ou 4, chaque masselotte pendulaire 2 comporte un élément central 17 et deux flasques 18, 19 disposés axialement de part et d'autre de l'élément central 17 et agencés pour assurer une solidarisation des deux rouleaux cylindriques 12, 13 à leur masselotte pendulaire 2 respective. L'élément central 17 et les deux flasques 18, 19 sont fixés les uns aux autres par l'intermédiaire d'une paire de rivets 20, 21 passant au travers d'alésages 22, 23 ménagés au travers de l'élément central 17 et des flasques 18, 19.

Les pistes de roulement internes 14, 15 sont formées sur la périphérie extérieure de l'élément central 17. Les pistes de roulement internes 14, 15 peuvent être obtenues par moulage ou par usinage. Les pistes de roulement internes 14, 15 peuvent notamment être obtenues par découpe, fraisage ou tout autre moyen d'usinage adapté.

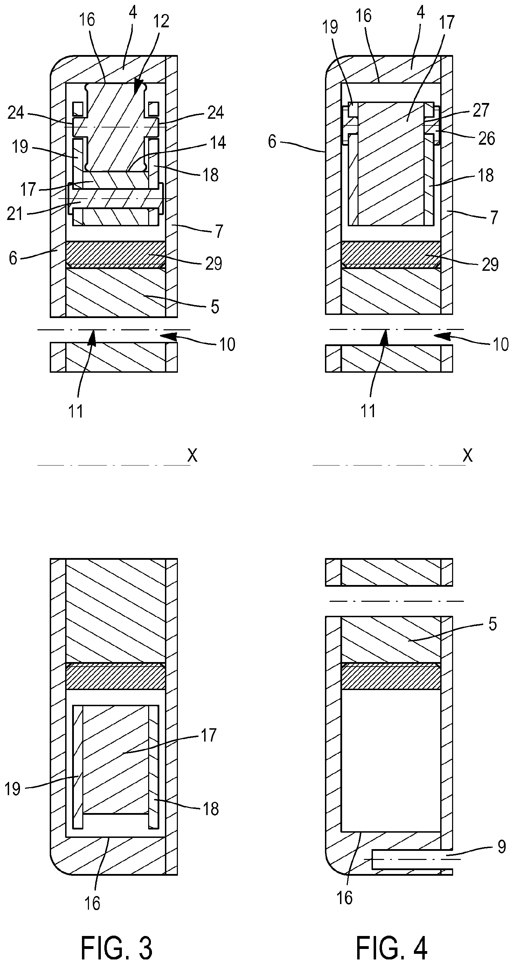

Chacune des extrémités des rouleaux cylindriques 12, 13 est équipée d'un pion 24 qui fait saillie axialement. Les pions 24 font de préférence saillie axialement selon l'axe de révolution des rouleaux cylindriques 12, 13. Les flasques 18, 19 sont équipés de rainures 25 recevant les pions 24 des rouleaux cylindriques 12, 13 de telle sorte que les rouleaux cylindriques 12, 13 soient emprisonnés entre les flasques 18, 19, tel que représenté sur la partie supérieure de figure 3, et ainsi solidarisés aux masselottes pendulaires 2.

Les rainures 25 présentent une forme globalement oblongue agencée pour permettre le déplacement des rouleaux cylindriques 12, 13 le long des pistes de roulement internes 14, 15. Un jeu fonctionnel est prévu entre le bord des rainures 25 et les pions 24 de telle sorte que, en fonctionnement normal, le guidage du mouvement des rouleaux cylindriques 12, 13 par rapport à la masselotte pendulaire 2 avec laquelle ils sont associés ne soit pas assuré par un guidage des pions 24 à l'intérieur des rainures 25 mais par le guidage desdits rouleaux cylindriques 12, 13 contre les pistes de roulement internes 14, 15. Dans le mode de réalisation représenté, les rainures 25 présentent une forme arquée dont la concavité est dirigée radialement vers l'intérieur. Par ailleurs, les rainures 25 sont symétriques deux à deux, d'une part, par rapport à un plan de symétrie radial de chaque masselotte pendulaire, et, d'autre part, par rapport à un plan de symétrie orthogonal à l'axe X.

Les masselottes pendulaires 2 sont équipées d'organes de maintien axial, permettant de centrer axialement les masselottes pendulaires 2 par rapport à l'organe de support 1. Les organes de maintien axial sont des patins 26, en matériau polymère, notamment représentés sur les figures 1 et 4, fixés contre les flasques 17, 18. Chaque patin 26 est interposé entre l'un desdits flasques 17, 18 et le disque 6, 7 de l'organe de support, en vis-à-vis et permet ainsi de centrer axialement les masselottes pendulaires 2 par rapport à l'organe de support 1. Les patins 26 sont avantageusement réalisés dans un matériau polymère présentant un faible coefficient de frottement. Les patins 26 sont équipés de tétons 27 engagés dans des trous 28 de forme complémentaire ménagés dans les flasques 17, 18.

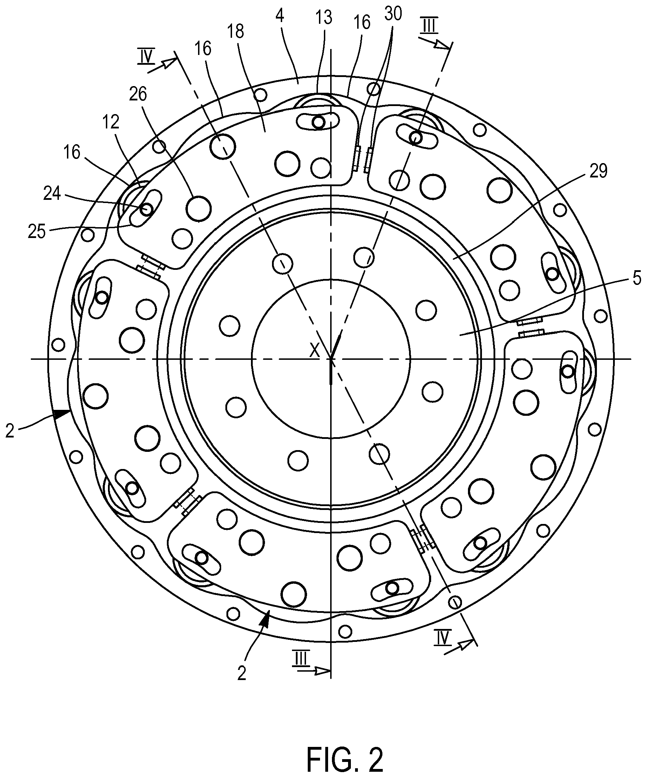

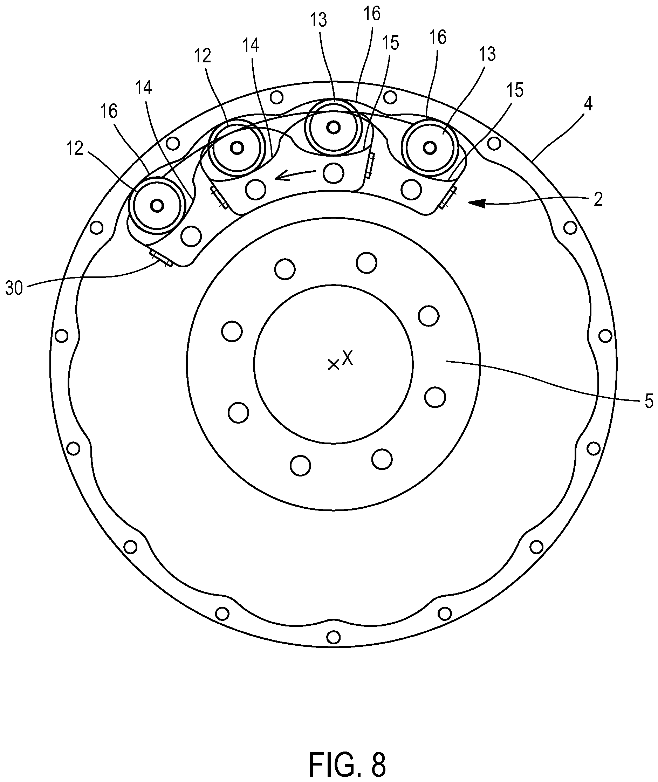

Comme représenté notamment sur la figure 2, les pistes de roulement externes 16 sont juxtaposées les unes à la suite des autres de manière continue autour de l'axe X. Ainsi, les rouleaux cylindriques 12, 13 sont chacun aptes à passer librement de l'une des pistes de roulement externes 16 à une autre piste de roulement externe adjacente 16. Dès lors, lorsque les masselottes pendulaires 2 sont sollicitées par des vibrations d'une forte amplitude entraînant une saturation de l'oscillateur pendulaire, les vibrations entraînent un débattement des masselottes pendulaires 2 tel que les corps roulants sont déplacés au-delà de l'extrémité de la piste de roulement externe 16 avec laquelle ils coopéraient précédemment et changent de piste de roulement externe 16. La figure 8 illustre schématiquement trois positions successives d'une masselotte pendulaire 2 lorsque chacun des rouleaux cylindriques 12, 13 associés à changer à deux reprises de piste de roulement externe 16. Le débattement angulaire des masselottes pendulaires 2 par rapport à l'organe de support 1 n'est donc pas limité par un quelconque élément de butée.

Les pistes de roulement externes 16 peuvent être obtenues par moulage ou par usinage. Les pistes de roulement externes 16 peuvent notamment être obtenues par découpe, fraisage ou tout autre moyen d'usinage adapté.

Dans le mode de réalisation représenté, l'organe de support 1 comporte plus de pistes de roulement externes que le système d'amortissement ne comporte de rouleaux cylindriques 12, 13. En effet, l'organe de support 1 comporte trois pistes de roulement externe 16 par masselotte pendulaire 2. Toutefois, comme expliqué précédemment, la géométrie des pistes de roulement étant déterminé en fonction de l'ordre d'accordage souhaité, le nombre de pistes de roulement externe par masselotte pendulaire 2 est notamment déterminé en fonction de l'ordre d'accordage des pistes de roulement externe. Ainsi, à titre d'exemple, l'organe de support peut notamment comporter, pour chaque masselotte pendulaire, deux pistes de roulement externes pour des masselottes pendulaires accordées à l'ordre 1,5, trois pistes de roulement externes pour des masselottes pendulaires accordées à l'ordre 2 ou quatre pistes de roulement externes pour des masselottes pendulaires accordées à l'ordre 4.

Notons que la somme angulaire des intervalles entre les masselottes pendulaires 2 est inférieure à la distance angulaire d'une piste de roulement externe 16. On entend ici par distance angulaire d'une piste de roulement externe 16 l'angle formé entre une droite passant par l'axe X et une première extrémité d'une piste de roulement externe et une droite passant par l'axe X et la seconde extrémité de ladite piste de roulement externe. Ainsi, un changement de piste de roulement externe 16 des rouleaux cylindriques 12, 13 de l'une des masselottes pendulaires 2 conduit à un changement de piste de roulement externe 16 des rouleaux cylindriques 12, 13 des autres masselottes pendulaires 2, ce qui permet d'assurer une répartition équilibrée des masselottes pendulaires 2 autour de l'axe X.

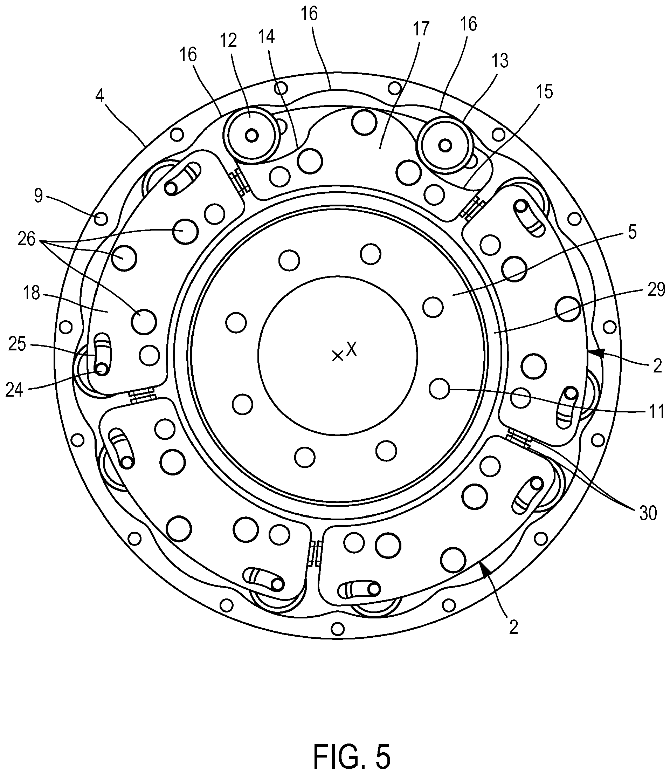

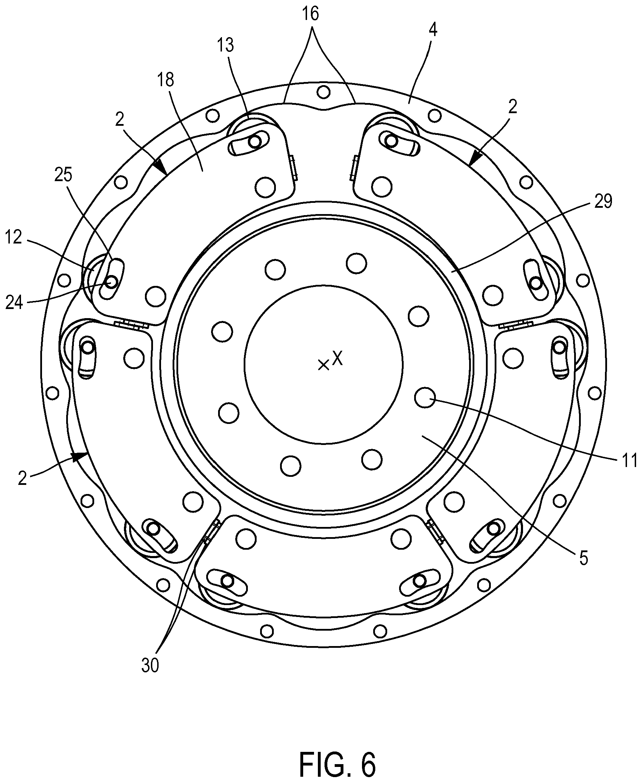

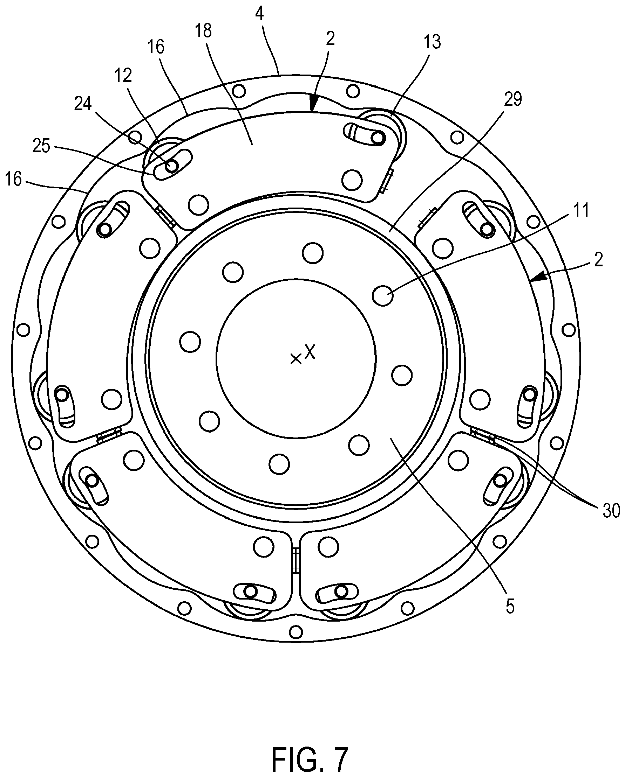

Par ailleurs, l'organe de support 1 comporte un élément permettant d'amortir la chute des masselottes pendulaires 2 par rapport à l'organe de support 1 lorsque les masselottes pendulaires 2 ne sont plus soumises à la force centrifuge. Dans le mode de réalisation représenté, sur les figures 2 à 7, un anneau en matériau élastomère 29 recouvre l'anneau intérieur 5 et permet ainsi de limiter les bruits lorsque les masselottes pendulaires 2 retombent sous l'effet de la gravité. Une telle configuration dans laquelle les masselottes pendulaires 2 ne sont plus soumises à la force centrifuge est notamment illustrée sur les figures 6 et 7.

Selon un autre mode de réalisation, l'anneau intérieur 5 peut directement être réalisé en élastomère afin d'amortir la chute des masselottes pendulaires 2 lors d'un arrêt moteur.

Les masselottes pendulaires 2 présentent également au niveau de leurs extrémités circonférentielles des éléments de butée 30 en élastomère permettant d'amortir les chocs et de limiter les bruits entre deux masselottes pendulaires adjacentes 12, lors d'un arrêt moteur ou dans des conditions de fonctionnement dans lesquelles les débattements des masselottes pendulaires 12 sont déphasés.

Dans le mode de réalisation représenté, chacune des deux extrémités circonférentielles de chacune des masselottes pendulaires 2 est équipé d'un élément de butée en élastomère 30. Toutefois, dans un autre mode de réalisation, non représenté, une seule des extrémités en vis-à-vis de deux masselottes pendulaires adjacentes est équipé d'un élément de butée en élastomère 30.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

**Revendications**

1. Système d'amortissement des vibrations pour une transmission de véhicule automobile comportant :

- un organe de support (1) apte à être entraîné en rotation autour d'un axe X et comportant une pluralité de pistes de roulement externes (16) ; et
- une pluralité de masselottes pendulaires (2) circonférentiellement réparties autour de l'axe X et comportant chacune deux pistes de roulement internes (14, 15), radialement à l'intérieur par rapport aux pistes de roulement externes (16) ;
- chacune des masselottes pendulaires (2) étant montée oscillante par rapport à l'organe de support (1) au moyen de deux corps roulants (12, 13) qui coopèrent respectivement avec l'une et l'autre des deux pistes de roulement internes (14, 15) de ladite masselotte pendulaire (2) et coopèrent chacun avec l'une des pistes de roulement externes (16) de l'organe de support (1) afin de guider le mouvement d'oscillation de ladite masselotte pendulaire (2) par rapport audit organe de support (1) ;
- ledit système d'amortissement étant **caractérisé en ce que** les pistes de roulement externes (16) sont juxtaposées les unes à la suite des autres continûment autour de l'axe X de telle sorte que chaque corps roulant (12, 13) soit apte à librement passer d'une première piste de roulement externe (16) à une seconde piste de roulement externe (16), adjacente à ladite première piste de roulement externe (16), lorsque les masselottes pendulaires (2) sont sollicitées par des vibrations d'une amplitude telle que chaque corps roulant (12,13) est déplacé au-delà d'une extrémité de ladite première piste de roulement externe (16).

2. Système d'amortissement selon la revendication 1, dans lequel les deux corps roulants (12, 13) associés à chaque masselotte pendulaire (2) sont retenus à la masselotte pendulaire (2) associée.

3. Système d'amortissement selon la revendication 2, dans lequel les éléments roulants sont des rouleaux cylindriques (12, 13) qui comportent chacun au moins une extrémité équipée d'un pion (24) faisant saillie axialement et dans lequel chaque masselotte pendulaire (2) comporte au moins un flasque (18, 19), bordant axialement les pistes de roulement internes (14, 15) de ladite masselotte pendulaire (2), qui est équipé de deux rainures (25) recevant chacune un desdits pions (24).

4. Système d'amortissement selon la revendication 3, dans lequel les rouleaux cylindriques (12, 13) comportent deux extrémités équipées d'un pion (24) faisant saillie axialement et dans lequel chaque masselotte pendulaire (2) comporte deux flasques disposés de part et d'autre des pistes de roulement internes (14, 15) de ladite masselotte pendulaire (2) qui sont chacun équipés de deux rainures (25) recevant chacune l'un desdits pions (24).

5. Système d'amortissement selon la revendication 3 ou 4, dans lequel un jeu fonctionnel est prévu entre chaque pion (24) et les bords de la rainure (25) dans laquelle ledit pion (24) est reçu, ledit jeu fonctionnel étant agencé de telle sorte que le pion (24) ne touche pas les bords de la rainure (25) lorsque le rouleau cylindrique (12, 13) équipé dudit pion coopère avec la piste de roulement interne (16) et la piste de roulement externe (16).

6. Système d'amortissement selon l'une quelconque des revendications 1 à 5, dans lequel l'organe de support (1) comporte un anneau extérieur (4) et un anneau intérieur (5) concentrique et coaxial à l'axe X entre lesquelles s'étendent radialement les masselottes pendulaires (2) et dans lequel les pistes de roulement externes (16) sont ménagées dans une surface intérieure de l'anneau extérieur (4).

7. Système d'amortissement selon la revendication 6, dans lequel l'anneau intérieur (5) est recouvert d'un anneau en matériau élastomère (29) de sorte à amortir la chute des masselottes pendulaires (2) lorsque les masselottes pendulaires (2) ne sont plus soumises à la force centrifuge.

8. Système amortissement selon la revendication 6 ou 7, dans lequel l'organe de support (1) comporte en outre deux disques (6, 7) s'étendant axialement de part et d'autres des anneaux intérieur (5) et extérieur (4).

9. Système d'amortissement selon la revendication 8, comportant des organes de maintien axial (26) qui sont fixés aux masselottes pendulaires (2) et qui sont disposés de part et d'autre desdites masselottes pendulaires (2), chaque organe de maintien axial (26) étant interposé entre l'une desdites masselottes pendulaires (2) et l'un des disques (6, 7) de l'organe de support (1) afin de centrer axialement les masselottes pendulaires (2) par rapport à l'organe de support (1).

10. Système d'amortissement selon l'une quelconque des revendications 1 à 9, dans lequel les masselottes pendulaires (2) comportent chacune deux extrémités circonférentielles équipées d'un élément de butée en élastomère (30).

11. Système d'amortissement selon l'une quelconque des revendications 1 à 10, dans lequel l'organe de support (1) comporte autant ou plus de pistes de roulement externes (16) que le système d'amortissement ne comporte de corps roulants (12, 13).

12. Système d'amortissement selon la revendication 11, dans lequel l'organe de support comporte trois ou quatre pistes de roulement externes (16) par masselotte pendulaire (2).

13. Système d'amortissement selon l'une quelconque des revendications 1 à 12, dans lequel les pistes de roulement externes (16) présentent une concavité dirigée vers l'extérieur et les pistes de roulement internes (14, 15) présentent une concavité dirigée vers l'intérieur.

14. Système d'amortissement selon l'une quelconque des revendications 1 à 13, dans lequel la somme angulaire des intervalles entre les masselottes pendulaires (2) est inférieure à la distance angulaire d'une piste de roulement externe (16).

15. Véhicule automobile comportant un système d'amortissement selon l'une quelconque des revendications 1 à 14.

**Patentansprüche**

1. Schwingungsdämpfungssystem für ein Kraftfahrzeuggetriebe, das Folgendes umfasst:

    - ein Trägerorgan (1), das um eine Achse X rotatorisch angetrieben werden kann und mehrere äußere Laufbahnen (16) aufweist; und
    - mehrere Pendelgewichte (2), die in Umfangsrichtung um die Achse X verteilt sind und jeweils zwei innere Laufbahnen (14, 15), die sich in Bezug auf die äußeren Laufbahnen (16) radial innen befinden, aufweist;
    - wobei jedes der Pendelgewichte (2) oszillierend in Bezug auf das Trägerorgan (1) mittels zweier Wälzkörper (12, 13) montiert ist, die mit der einen bzw. der anderen der beiden inneren Laufbahnen (14, 15) des Pendelgewichts (2) zusammenwirken und jeweils mit einer der äußeren Laufbahnen (16) des Trägerorgans (1) zusammenwirken, um die Oszillationsbewegung des Pendelgewichts (2) in Bezug auf das Trägerorgan (1) zu führen;
    - wobei das Dämpfungssystem **dadurch gekennzeichnet ist, dass** die äußeren Laufbahnen (16) um die Achse X ununterbrochen aufeinander folgend nebeneinander liegen, derart, dass sich jeder Wälzkörper (12, 13) von einer ersten äußeren Laufbahn (16) zu einer zweiten äußeren Laufbahn (16), die zu der ersten äußeren Laufbahn (16) benachbart ist, frei bewegen kann, wenn die Pendelgewichte (2) durch Schwingungen mit einer Amplitude, derart, dass jeder Wälzkörper (12, 13) über ein Ende der ersten äußeren Laufbahn (16) hinaus verlagert wird, beansprucht werden.

2. Dämpfungssystem nach Anspruch 1, wobei die beiden Wälzkörper (12, 13), die jedem Pendelgewicht (2) zugeordnet sind, an dem zugeordneten Pendelgewicht (2) gehalten werden.

3. Dämpfungssystem nach Anspruch 2, wobei die Wälzelemente zylindrische Rollen (12, 13) sind, die jeweils wenigstens ein Ende besitzen, das mit einem Stift (24) ausgerüstet ist, der axial vorsteht, und wobei jedes Pendelgewicht (2) wenigstens einen Flansch (18, 19) aufweist, der axial an die inneren Laufbahnen (14, 15) des Pendelgewichts (2) angrenzt und mit zwei Rillen (25) versehen ist, die jeweils einen der Stifte (24) aufnehmen.

4. Dämpfungssystem nach Anspruch 3, wobei die zylindrischen Rollen (12, 13) zwei Enden besitzen, die mit einem Stift (24) versehen sind, der axial vorsteht, und wobei jedes Pendelgewicht (2) zwei Flansche aufweist, die beiderseits der inneren Laufbahnen (14, 15) des Pendelgewichts (2) angeordnet sind und mit zwei Rillen (25) versehen sind, die jeweils einen der Stifte (24) aufnehmen.

5. Dämpfungssystem nach Anspruch 3 oder 4, wobei zwischen jedem Stift (24) und den Rändern der Rille (25), in der der Stift (24) aufgenommen ist, ein Arbeitsspiel vorgesehen ist, wobei das Arbeitsspiel so beschaffen ist, dass der Stift (24) die Ränder der Rille (25) nicht berührt, wenn die zylindrische Rolle (12, 13), die mit dem Stift versehen ist, mit der inneren Laufbahn (16) und mit der äußeren Laufbahn (16) zusammenwirkt.

6. Dämpfungssystem nach einem der Ansprüche 1 bis 5, wobei das Trägerorgan (1) einen Außenring (4) und einen Innenring (5) aufweist, die zu der Achse X konzentrisch und koaxial sind und zwischen denen sich die Pendelgewichte (2) radial erstrecken, und wobei die äußeren Laufbahnen (16) in einer inneren Oberfläche des Außenrings (4) ausgebildet sind.

7. Dämpfungssystem nach Anspruch 6, wobei der Innenring (5) mit einem Ring (29) aus Elastomermaterial beschichtet ist, derart, dass der Stoß der Pendelgewichte (2), wenn die Pendelgewichte (2) keiner Zentrifugalkraft mehr unterliegen, gedämpft wird.

8. Dämpfungssystem nach Anspruch 6 oder 7, wobei das Trägerorgan (1) außerdem zwei Scheiben (6, 7) umfasst, die sich axial beiderseits des Innenrings (5) und des Außenrings (4) erstrecken.

9. Dämpfungssystem nach Anspruch 8, das Axialhalteorgane (26) umfasst, die an den Pendelgewichten (2) befestigt sind und die beiderseits der Pendelgewichte (2) angeordnet sind, wobei jedes Axialhalteorgan (26) zwischen einem der Pendelgewichte (2) und einer der Scheiben (6, 7) des Trägerorgans (1) eingefügt ist, um die Pendelgewichte (2) in Bezug auf das Trägerorgan (1) axial zu zentrieren.

10. Dämpfungssystem nach einem der Ansprüche 1 bis 9, wobei die Dämpfungsgewichte (2) jeweils Umfangsenden besitzen, die mit einem Elastomer-Anschlagelement (30) versehen sind.

11. Dämpfungssystem nach einem der Ansprüche 1 bis 10, wobei das Trägerorgan (1) ebenso viele äußere Laufbahnen (16) oder mehr aufweist wie das Dämpfungssystem Wälzkörper (12, 13) besitzt.

12. Dämpfungssystem nach Anspruch 11, wobei das Trägerorgan drei oder vier äußere Laufbahnen (16) pro Pendelgewicht (2) aufweist.

13. Dämpfungssystem nach einem der Ansprüche 1 bis 12, wobei die äußeren Laufbahnen (16) eine Konkavität aufweisen, die nach außen orientiert ist, und die inneren Laufbahnen (14, 15) eine Konkavität aufweisen, die nach innen orientiert ist.

14. Dämpfungssystem nach einem der Ansprüche 1 bis 13, wobei die Winkelsumme der Intervalle zwischen den Pendelgewichten (2) kleiner als die Winkelstrecke einer äußeren Laufbahn (16) ist.

15. Kraftfahrzeug, das ein Dämpfungssystem nach einem der Ansprüche 1 bis 14 umfasst.

**Claims**

1. A vibration damping system for a motor vehicle transmission, comprising:

   - a support member (1) capable of being driven rotationally around an axis X and having a plurality of outer raceways (16); and
   - a plurality of pendulum flyweights (2) distributed circumferentially around the axis X and each having two inner raceways (14, 15) that are radially internal with respect to the outer raceways (16);
   - each of the pendulum flyweights (2) being mounted oscillatingly with respect to the support member (1) by means of two rolling bodies (12, 13) that interact respectively with one and the other of the two inner raceways (14, 15) of said pendulum flyweight (2) and each interact with one of the outer raceways (16) of the support member (1) in order to guide the oscillating movement of said pendulum flyweight (2) with respect to said support member (1),
   - said damping system being **characterized in that** the outer raceways (16) are juxtaposed one after another continuously around the axis X so that each rolling body (12, 13) is capable of passing freely from a first outer raceway (16) to a second outer raceway (16), adjacent to said first outer raceway (16), when the pendulum flyweights (2) are acted upon by vibrations having an amplitude such that each rolling body (12, 13) of said pendulum flyweights (2) is displaced beyond an end of said first outer raceway (16).

2. The damping system according to Claim 1, in which the two rolling bodies (12, 13) associated with each pendulum flyweight (2) are held on the associated pendulum flyweight (2).

3. The damping system according to Claim 2, in which the rolling elements are cylindrical rollers (12, 13) that each have at least one end equipped with an axially projecting pin (24), and in which each pendulum flyweight (2) has at least one flange (18, 19), axially bordering the inner raceways (14, 15) of said pendulum flyweight (2), which is equipped with two grooves (25) each receiving one of said pins (24).

4. The damping system according to Claim 3, in which the cylindrical rollers (12, 13) have two ends equipped with an axially projecting pin (24), and in which each pendulum flyweight (2) has two flanges, arranged on either side of the inner raceways (14, 15) of said pendulum flyweight (2), which are each equipped with two grooves (25) each receiving one of said pins (24).

5. The damping system according to Claim 3 or 4, in which a functional clearance is provided between each pin (24) and the edges of the groove (25) in which said pin (24) is received, said functional clearance being configured such that the pin (24) does not touch the edges of the groove (25) when the cylindrical roller (12, 13) equipped with said pin interacts with the inner raceway (16) and the outer raceway (16).

6. The damping system according to any one of Claims 1 to 5, in which the support member (1) has an external ring (4) and an internal ring (5) which are concentric and coaxial with the axis X and between which the pendulum flyweights (2) extend radially, and in which the outer raceways (16) are configured in an internal surface of the external ring (4).

7. The damping system according to Claim 6, in which the internal ring (5) is covered with a ring (29) of elastomeric material in order to damp the fall of the pendulum flyweights (2) when the pendulum flyweights (2) are no longer subjected to centrifugal force.

8. The damping system according to Claim 6 or 7, in which the support member (1) furthermore has two discs (6, 7) extending axially on either side of the internal ring (5) and external ring (4).

9. The damping system according to Claim 8, having axial retention members (26) that are fastened to the pendulum flyweights (2) and are arranged on either side of said pendulum flyweights (2), each axial retention member (26) being interposed between one of said pendulum flyweights (2) and one of the discs (6, 7) of the support member (1) in order to axially center the pendulum flyweights (2) with respect to the support member (1).

10. The damping system according to any one of Claims 1 to 9, in which the pendulum flyweights (2) each have two circumferential ends equipped with an abutment element (30) made of elastomer.

11. The damping system according to any one of Claim 1 to 10, in which the support member (1) has as many outer raceways (16) as, or more outer raceways (16) than, the damping system has rolling bodies (12, 13).

12. The damping system according to Claim 11, in which the support member has three or four outer raceways (16) per pendulum flyweight (2).

13. The damping system according to any one of Claims 1 to 12, in which the outer raceways (16) exhibit a concavity directed outward, and the inner raceways (14, 15) exhibit a concavity directed inward.

14. The damping system according to any one of Claims 1 to 13, in which the angular sum of the intervals between the pendulum flyweights (2) is less than the angular distance of one outer raceway (16).

15. A motor vehicle having a damping system according to any one of Claims 1 to 14.

FIG. 1

FIG. 2

FIG. 3          FIG. 4

FIG. 5

FIG. 6

FIG. 7

FIG. 8

**EP 3 207 280 B1**

## RÉFÉRENCES CITÉES DANS LA DESCRIPTION

**Documents brevets cités dans la description**

- FR 2989753
- EP 2703688 A2
- US 1315380 A